(19) **Europäisches Patentamt / European Patent Office / Office européen des brevets**

(11) **EP 1 274 531 B1**

(12) **EUROPEAN PATENT SPECIFICATION**

(45) Date of publication and mention
of the grant of the patent:
**15.08.2007 Bulletin 2007/33**

(51) Int Cl.:
***B23B 29/06*** *(2006.01)* ***B23B 29/08*** *(2006.01)*

(21) Application number: **01918120.5**

(86) International application number:
**PCT/SE2001/000717**

(22) Date of filing: **02.04.2001**

(87) International publication number:
**WO 2001/081034 (01.11.2001 Gazette 2001/44)**

(54) **CUTTING TOOL SYSTEM AND MEANS OF ACCURATELY POSITIONING THE SAME**

SCHNEIDWERKZEUG UND VORRICHTUNG ZUR GENAUEN POSITIONIERUNG DESSEN

SYSTEME D'OUTIL DE COUPE ET MOYEN PERMETTANT DE LE POSITIONNER AVEC PRECISION

(84) Designated Contracting States:
**AT BE CH CY DE DK ES FI FR GB GR IE IT LI LU MC NL PT SE TR**

(30) Priority: **20.04.2000 SE 0001473**

(43) Date of publication of application:
**15.01.2003 Bulletin 2003/03**

(73) Proprietor: **Sandvik Intellectual Property AB 811 81 Sandviken (SE)**

(72) Inventors:
• **ERICKSSON, Hakan
S-81141 Sandviken (SE)**
• **SÖRLUND, Tryggve
S-811 36 Sandviken (SE)**

(56) References cited:
**WO-A1-81/03635**     **DE-A1- 2 000 186**
**SE-C2- 509 421**

## Description

Technical field of the invention

In a first aspect this invention relates to a cutting tool system of the type that comprises, on one hand, a clamping device including an aperture, which is confined by an inner surface, and a slit allowing the width of the aperture to be varied, and, on the other hand, a cutting tool including a shaft and a cutting edge, the shaft having an envelope surface mating with the inner surface of the aperture.

In cutting tool systems of the above mentioned type it is important to establish the correct position of the operative cutting edge of the tool. This is particularly the case in tools used for internal turning, such as boring bars. Such tools comprise a shaft and at least one cutting edge at an end of the shaft. The cutting edge may be part of a cutting insert, which may be attached to the cutting tool mechanically, for example by use of a screw or metallurgically, or be an integral part of a solid, one piece tool.

Internal turning operations differ from external turning operations in several respects and these differences must be taken into consideration if internal turning operations are to be optimized. Firstly there is a limited space inside the workpiece. This influences the design of the cutting tool, making it essential to find an optimum compromise between maximum strength/rigidity and minimum volume. In practice the solution is a bar, which in practice often is substantially cylindrical although designed with one or more longitudinal planar surfaces which are parallel to the longitudinal axis of the bar, said surfaces being used to fix the rotational position of the bar in the tool-clamping device. Thus the fixing of the rotational position of the bar, and hence the height of the operative cutting edge, is achieved at the expense of a somewhat weaker design of the bar.

The limited space inside the workpiece within which the bar must operate also makes chip forming, chip flow and chip breaking far more critical than in external turning operations, since failure of anyone of these functions can lead to chip jamming, damaged tools, poor finish on the machined surfaces, and tool vibration. Therefore, tool manufacturers put considerable effort into designing tools for internal turning operations which minimize these problems, but to be successful it is essential that the position of the cutting edge relative to the workpiece be exactly as intended.

Secondly, internal turning operations differ from external ones in that vibration of the tool is always present and it has a major influence on the tool life, the surface finish, and the productivity. Incorrect positioning of the cutting edge may lead to cutting forces which differ from those for which the tool is designed and the negative effects on chip forming listed above will also often lead to vibration.

Prior Art

SE 500 836 teaches the use of a spirit level in contact with a flat planar upper surface of a boring bar which is used to ensure that the operative cutting edge of an insert mounted on the boring bar is clamped in a pre-determined position. This solution has the disadvantage that the planar surface decreases the material in the bar and hence its strength. Furthermore the use of a spirit level is not desirable because of the limited space and poor accessibility in a modern machine tool as well as the difficulties of reading a spirit level due to the cooling fluid and the chips.

WO 95/35179 teaches the use of a partially cylindrical boring bar having two planar longitudinal surfaces running parallel to the longitudinal axis of the bar. Said surfaces abut against matching surfaces in a "V" shaped groove in a tool block. This solution also involves a weakening of the bar.

SE 509 421 teaches the use of a setting device to determine the angular position of a cutting edge of a cutting tool. The cutting tool is locked in position in the device by means of a fixing element, which interacts with a cylindrical aperture in the envelope surface of the cutting tool. A rotatable disc having angular markings is then used together with a spirit level to determine the angular position of the cutting edge. This solution is time consuming to use and not suitable for the limited space and poor accessibility in a machine tool.

The objects and features of the present invention

The present invention aims at eliminating the disadvantages of previously known cutting tool systems having means for determining the exact position of an operative cutting edge.

A primary object of the invention therefore is to provide a cutting tool system which is simple and lends itself to easy use e.g. in the confined space, poor lighting and dirty environment which may occur in a machine tool.

Another object is to create a cutting tool system which can be used on a bar being cylindrical in order to eliminate the requirement of one or several planar reference surfaces or a deep "V" groove which would weaken the bar.

A further object is to create a cutting tool system that can be reasonably priced when applied to new tools or as conversion kits for older installations.

At least the primary object of the invention is achieved by the cutting tool system defined in independent claim 1. Preferred embodiments of the invention are furthermore defined in the dependent claims.

Brief description of the drawings

In the drawings:

Fig. 1-3 are perspective views illustrating three different types of previously known cutting tool systems (PRIOR ART),

Fig. 4 is a perspective view of a cutting tool and a clamping device included in a cutting tool system according to the invention, the clamping device consisting of a block,

Fig. 4a-4c are perspective views showing three alternative embodiments of the cutting tool system,

Fig. 5 is a perspective view of another alternative embodiment of the invention in which the clamping device is in the form of a sleeve,

Fig. 5a-5b are perspective views of alternative embodiments using a sleeve as the clamping device,

Fig. 6 is an enlarged cross-sectional view of the cutting tool, and a clamping device in the form of a block in which a spring device is included,

Fig. 7 is a further enlarged cross-sectional view of the spring device of fig. 6,

Fig. 8 is a cross-sectional view of a second embodiment of the spring device,

Fig. 9 is an extremely enlarged cross-sectional view of a locating device included in the spring devices of figs. 6-8, and

Fig. 10 is a cross-sectional view of the cutting tool mounted in the clamping device, the view showing means of measuring the cutting edge height.

Brief description of previously known cutting tool systems

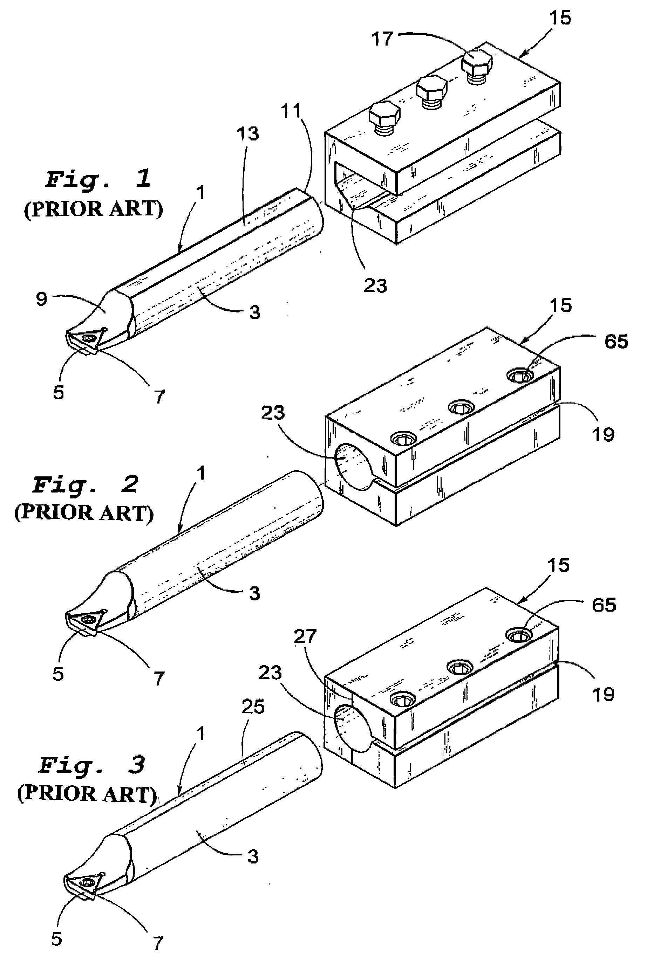

Fig. 1 illustrates a typical prior art combination consisting of a cutting tool 1 in the form of a boring bar and a clamping device in the form of a block 15. The cutting tool consists of a substantially cylindrical shaft 3 having front and rear ends 9, 11. The front end 9 accommodates at least one cutting insert 5 having a cutting edge 7. The cutting tool 1 is located and secured in the clamping device 15 by means of at least one clamping screw 17 acting on a planar surface 13 on the upper side of the bar, the lower part of an aperture 23 in the clamping block being V-shaped. This solution is commonly used, but is not to be recommended, since it gives a limited clamping force because of the restricted contact surface of the tips of the screws 17 on the planar surface 13, resulting in a poor location of the bar and hence poor repeatable accuracy of the height of the cutting edge 7.
Fig. 2 illustrates another known cutting tool system in which a substantially cylindrical cutting tool 1 is accommodated in a correspondingly cylindrical aperture 23 in a clamping block 15. Said block includes a longitudinal slit 19 along the entire length of one side. One or more screws 65 are arranged perpendicular to the slit and pass from the upper surface of the block though non-threaded apertures and through the slit and into threaded apertures in the block below the slit. When the screws are tightened the slit is caused to narrow and as a consequence the effective diameter of the aperture 23 is reduced. In this manner a clamping force is exerted by the inner surface of the aperture 23 onto a large contact surface of the substantially cylindrical shaft 3. This solution provides an excellent clamping force but no means of obtaining positional accuracy. To accurately locate the height of the cutting edge 7 of the cutting insert 5 it is necessary to use a reference surface and a dial gauge.

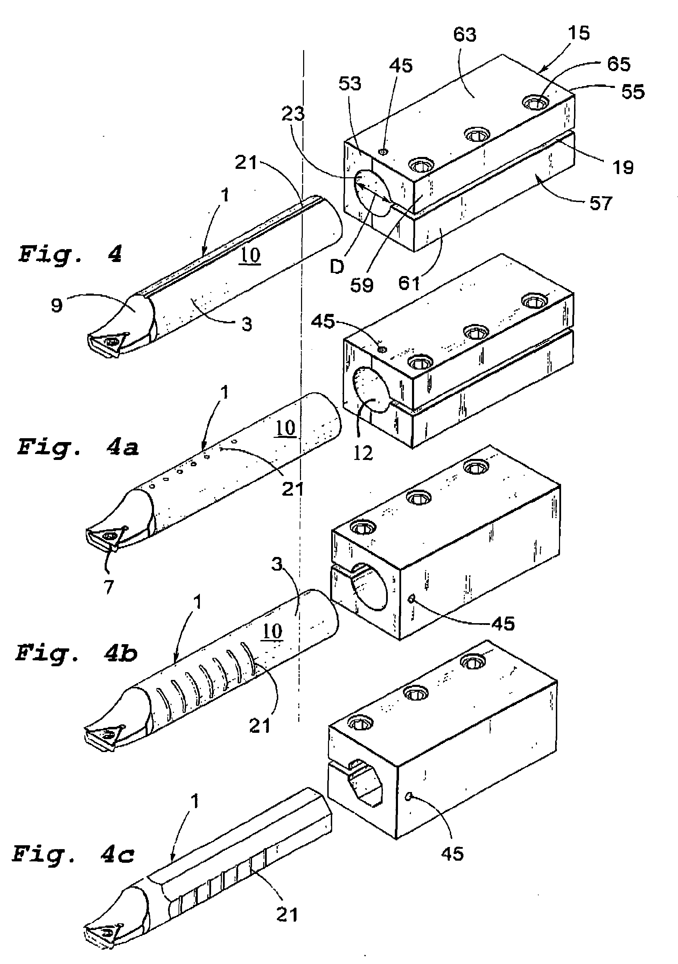

In Fig. 3 a prior art solution is shown which is similar to the one shown in Fig. 2 in that a cylindrical cutting tool 1 is located in a clamping block, but here a scribe line 25 has been provided the upper side of the bar running longitudinally and parallel to the axis of the boring shaft 3. A scribe line 27 is also provided on the front face of the clamping block 15. When installing the shaft in the block the operator can visually align the scribe line on the shaft with that on the front face of the block and hence ensure that the height of the cutting edge 7 is established with a certain degree of accuracy. The shaft is then secured in the aperture in the block by means of the screws 65. In practical tests, as described below, it has been established that this solution does not ensure acceptable repeatable accuracy of the height of the cutting edge.

Detailed description of preferred embodiments of the invention

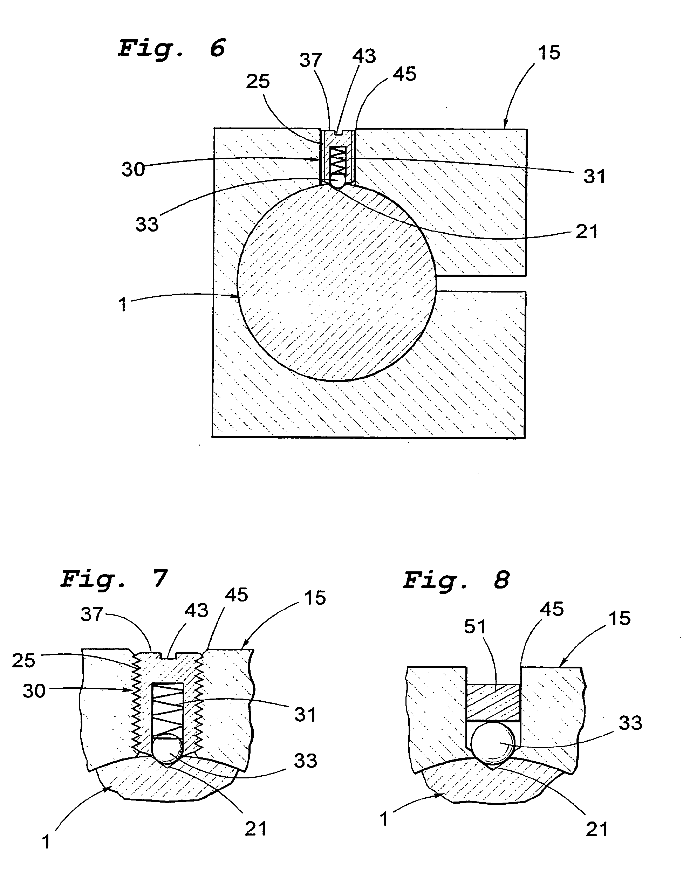

Fig. 4 illustrates a cutting tool and a clamping block according to the invention. The cutting tool 1 comprises a bar in the form of a substantially cylindrical shaft having a front portion 9, which comprises at least one cutting edge 7. The envelope surface 10 of the shaft 3 is formed with a recess 21 in the form of a "U"-shaped groove, which runs parallel with the longitudinal centre axis of the shaft. The groove has a symmetrical cross sectional form and the two side surfaces of the groove, as seen in cross section, are of equal length. The clamping block 15 includes an aperture 23, which runs the entire length of the block and has openings both at the front surface 53 and the rear surface 55. The inner diameter of the aperture or bore "D" is somewhat larger than the outer diameter of the tool shaft. A longitudinal slit 19 links the aperture to one of the side surfaces 57 of the block along the entire length thereof. One or more apertures are provided from the upper surface of the tool block running vertically downwards through the slit 19 and into the lower part of the block. The lower part of each aperture is threaded to enable a screw 65 to be passed through the aperture in the upper part 59 of the block and be screwed into the lower part 61. The task of these screws is to force the parts 59, 61 of the block above and below the aperture 23 together, thus reducing the effective diameter "D" and clamping the tool shaft accommodated in said aperture. Furthermore the clamping block 15 includes a bore 45 running vertically downwards from the upper surface of the block and opening in the centre aperture 23 which accommodates the shaft. Said bore 45 is located close to the front edge 53 of the block where the upper surface 63 meets the front face 53 and its centre line cuts the centre line of the aperture in the block. The bore 45 accommodates a spring device 30, which is illustrated in more detail in Fig. 6, The recess 21, in this case a groove, interacts with a spring-loaded member of the spring device to give a slight, but significant increase of the force required to rotate the cutting tool around its centre longitudinal axis as it passes the point of interaction. Once the correct location has been established the cutting tool is clamped in the clamping device.

Fig. 4a illustrates a second embodiment of the invention in which a number of recesses 21 are in the form of symmetrical, inverted, conical dimples in the envelope surface 10 of the tool shaft 1, said dimples having a basically "U " shaped cross section irrespective of whether the cross section of the cutting tool is taken along the length thereof or at 90 degrees to the same. If a plurality of such dimples is used they are to be arranged along a line parallel to the centre line of the tool shaft and to be spaced at regular intervals, e.g. 10 mm, from each other, The positioning of the spring device in bore 45 is the same as in the embodiment shown in Fig. 4 and the interplay between the spring device and dimple 26 is similar. Thus, in this case, the device provides an indication of both the rotational position and the longitudinal position of the tool shaft and hence the cutting edge 7. The inner surface of aperture is designated 12.

Fig. 4b illustrates a further embodiment of the cutting tool system. In this case, recesses in the form of "U" shaped grooves 21 are positioned in the envelope surface 10 of the shaft 3 and run part of the way around the shaft in a plane which is at right angle to the longitudinal centre axis of the shaft. The grooves 21 are spaced at regular intervals from each other, for example at 10 mm spacing. The interaction with the spring device is in this case similar to those described earlier with the exception that this solution can only be used for the longitudinal location of the shaft in the clamping device.

Fig. 4c illustrates a further embodiment of the invention that is very similar in design and function to that shown in Fig. 4b. The difference in this case is that the shaft of the cutting tool and the matching aperture in the clamping device are prismatic rather than cylindrical. Recesses in the form of grooves 21 are provided on one or more of the planar faces of the shaft in a plane at right angles to the longitudinal centre line of the shaft. The interaction with the spring device can only be used for the longitudinal location of the shaft in the clamping device.

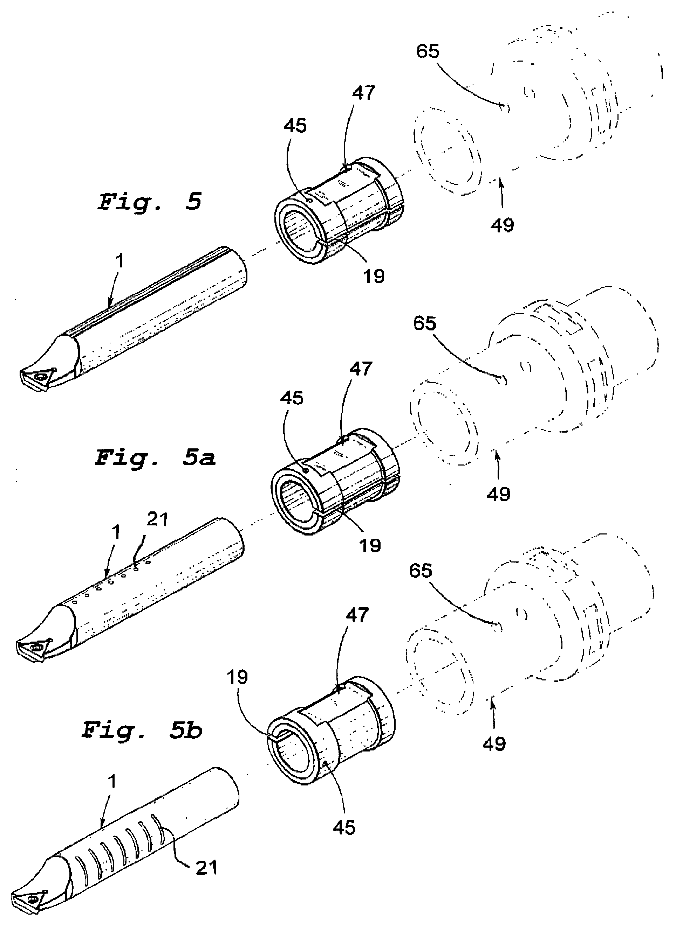

Figs. 5, 5a and 5b illustrate the invention as used in an arrangement that is especially suited for modern machine tools. In this case the clamping device is in the form of a sleeve 47 which may be introduced between the bar 1 and a tool block or tool adaptor 49. The sleeve 47 is designed to accommodate a spring device, as is also the adaptor 49 in exactly the same manner as described above for figure 4. As described previously the spring device is used only to give an indication of a required position prior to clamping the cutting tool. In this solution clamping is carried out with the help of screws 65 in the adaptor 49, which lock the sleeve in position by interaction with the planar surface of a whistle notch and at the same time exert a pressure on the sleeve causing the slit 19 to narrow, hence clamping the cutting tool in the sleeve.

Fig. 6 and 7 illustrate a cross section through the cutting tool 1, the clamping device 15 and a spring device 30. The spring device 30 is installed in a bore 45 close to the upper front edge of the clamping device 15. The position of the spring device in the bore 45 is carefully adjusted to ensure the correct interplay between a spring-loaded member 33 and the dimple or groove 21 in the tool. The spring device 30 consists of a housing 25 having an external thread and a groove 43 in the one end surface 37, said groove 43 being designed to accommodate the tip of a screw driver which is to be used when screwing the spring device into the bore 45. The housing is cylindrical and has an aperture at its lower end into which a coil spring 31 and a spherical ball or a cylinder 33 are mounted. When the aperture in the housing and the recess 21 in the outer envelope surface of the tool shaft are inline, the ball will be pushed by the force of the spring 31 partially into the recess. The size of the ball and the depth and angle of the sidewalls of the recess are carefully chosen to ensure that the ball does not become fixed in the recess. The combination is designed simply to give a mechanical, and on occasions also a slight audible, indication that the spring loaded member 33 and the recess are in line and hence the height and/or the longitudinal position of the operative cutting edge is correct. The mechanical indication is in the form of a slight but distinct increase in the manual force required to rotate the tool shaft slightly around or parallel to the longitudinal axis when departing from the position where groove/dimple and spring loaded ball are in line. The audible spring loaded device is a "click" sound heard when the ball locates in the groove,

Although contact between the spring device and the groove 21 has been referred to being via a ball 33, it is possible to replace the ball by a cylinder. Said cylinder would have to be mounted so that its centre axis becomes parallel with the centre axis of the tool shaft. The supporting arrangement for such a cylinder would be somewhat different from that for the ball, but its function would be the same.

Fig. 8 is a cross-sectional view of a second embodiment of the spring device in interaction with a "U" groove 21 in the circumference of the cutting tool. In this case the construction of the spring device has been simplified so that it consists of just a ball or a cylinder 33 and an elastic, cylindrical cap 51, for example of rubber which serves both to retain the ball in place and allow the ball to move slightly upwards when a pressure is applied from below. The diameter of the bore 45 is reduced at the open end to ensure that the ball 33 is retained in the bore whilst still allowing the ball to protrude sufficiently so that it can interact with the "U"-groove 21.

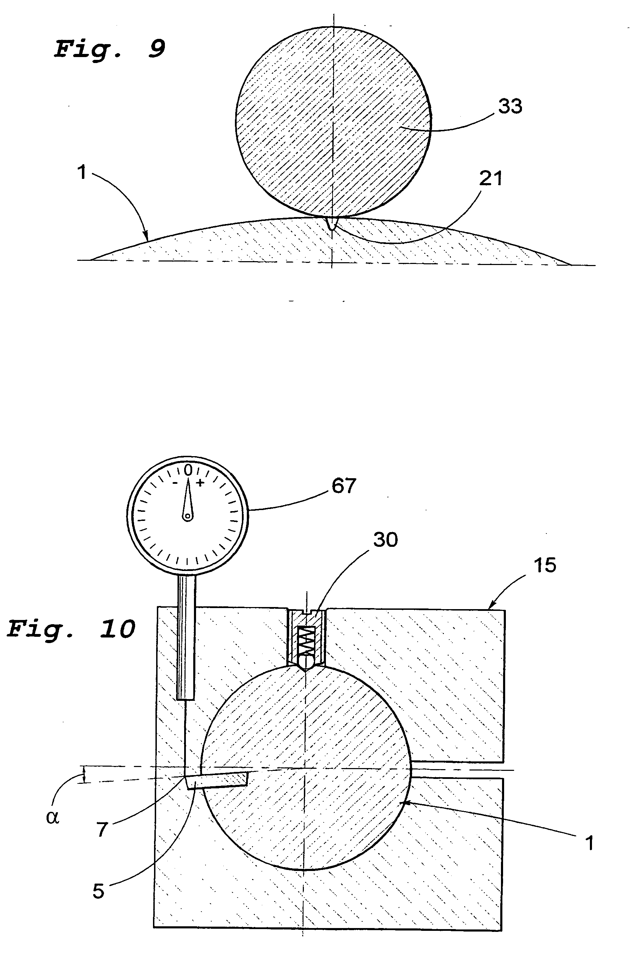

Fig. 9 is an extremely enlarged cross section of the ball or cylinder 33 of the spring device and the cutting tool 1 showing the interplay between the ball and the recess 21. The diameter of the ball is typically in the range of 2-5 mm and the recommended value 2,5 mm. The depth of the "U"-shaped recess 21 is typically in the range of 0,01-0,2 mm and the recommended value is 0,04-0,06 mm. The point angle of the "U" shaped recess lies between 35-85°, preferably 55-65° and recommendably about 60°.

Fig. 10 illustrates how practical tests were carried out to assess the repeatable positional accuracy obtained using, on one hand, the spring device according to the invention, and on the other hand, the scribe line method shown in Fig. 3. This figure 10 shows the method as used with the system according to the invention. The cutting tool 1 is mounted in the clamping device 15 and the cutting tool is brought into the desired position by rotating the same to a position where a slight increase of force is required to rotate it further in either direction. A clock gauge 67 is used to measure the height of the cutting edge 7 of the insert 5. In the alternative method scribe lines on the envelope surface of the cutting tool and on the front face of the clamping device (see Fig. 3) were brought in line to obtain the desired position of the cutting edge.

The practical tests were carried out by a group of highly experienced mechanics to compare the results of aligning a cutting tool using scribe lines with those obtained using the cutting tool system of the invention.

Results of laboratory test of indexing a boring bar

Bar used A06F-STFCR 06-R in sleeve 131-2006-A

Deviation of the height of an operative cutting edge from the correct value measured in 1/100 mm by the clock gauge 67

| Test Person | Indexing line to line | Indexing by means of the invention |
|---|---|---|
| 1 | 19 | 0 |
| 2 | +3 | -1 |
| 3 | 0 | 0 |
| 4 | +10 | -2 |
| 5 | -10 | -1 |
| 6 | +16 | -1 |
| 7 | +2 | -1 |
| 8 | +6 | -2 |
| 9 | +14 | -2 |
| 10 | +6 | -2 |
| Total deviation | Σ 0, 86 mm | Σ 0,11 mm |
| Average deviation | 0,86 /10 = 0,086 | 0,11/10 = 0,011 |

$$\tan \alpha = \frac{0{,}086}{4{,}5} = 0{,}0191 \qquad \tan \alpha = \frac{0{,}011}{4{,}5} = 0{,}0024$$

$$= 1° \, 5' \qquad\qquad = 0° \, 8'$$

As can be seen from the table the scribe line method gave an average deviation in the cutting edge height of 0,086 mm, whereas the method according to the invention gave an average of 0,011 mm. These values correspond to angular deviations of 1° 5' and 0° 8' respectively. In other words the use of the spring device gives more than eight times greater precision than the scribe line method.

Feasible modifications of the invention

The invention is not solely restricted to the embodiments described and shown in the drawings. Thus the invention may also apply to solutions where the positions of the recesses and spring-loaded devices have been reversed. That is to say the spring device may be mounted in the envelope surface of the cutting tool and the recesses formed in the inner surface of the aperture 23. Similarly other combinations of the groove and dimple solutions shown in Fig. 4 to 4c are possible, for example a combination of Fig- 4 and Fig. 4b.

Although the present invention has been described in connection with preferred embodiments thereof, it will be appreciated by those skilled in the art that additions, deletions, modifications, and substitutions not specifically described may be made without departing from the scope of the invention as defined in the appended claims.

**Claims**

1.  A cutting tool system for chip-forming machining comprising, on one hand, a clamping device (15, 47) including, an aperture (23), which is confined by an inner surface (12), and a slit (19) allowing the width of the aperture (23) to be varied, and, on the other hand, a cutting tool (1) including a shaft (3) and a cutting edge (7), the shaft having an envelope surface (10) mating with the inner surface (12) of the aperture, **characterized in that** a spring-loaded member (33) of a spring device (30) projects from one of said surfaces (10, 12) and engages a recess (21) in the other one so as to indicate the position of the cutting edge (7) relative to the clamping device.

2.  A cutting tool system according to claim 1, wherein the clamping device is a block (15) including means (65) for varying the width of the aperture (23) in order to clamp the tool shaft therein.

3.  A cutting tool system according to claim 1, wherein the clamping device is a sleeve (47) mounted in an aperture of an adaptor (49) including means (65) for varying the width of the aperture.

4.  A cutting tool system according to any one of the preceding claims, wherein the shaft (3) of the cutting tool (1) is substantially cylindrical and the recess consists of a groove (21) extending along the length of the envelope surface (10) of the shaft (3) or the inner surface (12) of the aperture (23), said groove being parallel to the centre axis of the shaft or the aperture.

5.  A cutting tool system according to any one of claims 1-4, wherein the shaft (3) of the cutting tool (1) and the aperture (23) of the clamping device are substantially cylindrical, a plurality of recesses in the form of dimples extending in a line along the length of either the envelope surface (10) of the shaft or the inner surface (12) of the aperture (23), said line of dimples being parallel to the centre line of the shaft or the aperture.

6.  A cutting tool system according to any one of claims 1-3, wherein one of the mating surfaces (10, 12) includes a spring device (30) and the other one a number of recesses in the form of grooves which extend at right angles to the centre axis of the tool shaft or the aperture, and are interspaced at regular intervals.

7.  A cutting tool system according to any one of the preceding claims, wherein the spring device (30) includes at one end a ball or a cylinder (33) which is loaded by a spring (31, 51) into a recess (2 1) having a cross section which is substantially U-shaped (21).

**Patentansprüche**

1. Schneidwerkzeugsystem für die spanbildende Bearbeitung mit einerseits einer Klemmvorrichtung (15, 47), die eine Öffnung (23) hat, welche durch eine innere Oberfläche (12) begrenzt ist, und einen Schlitz (19) hat, welcher die Veränderung der Breite der Öffnung (23) gestattet, und andererseits mit einem Schneidwerkzeug (1), welches einen Schaft (3) und eine Schneidkante (7) hat, wobei der Schaft eine Hülloberfläche (10) hat, welche mit der inneren Oberfläche (12) der Öffnung zusammenpaßt,
**dadurch gekennzeichnet, daß** ein federbelastetes Teil (33) einer Federvorrichtung (30) aus einer der Oberflächen (10, 12) vorsteht und mit einer Ausnehmung (21) in der anderen in Eingriff kommt, um die Position der Schneidkante (7) relativ zu der Klemmvorrichtung anzuzeigen.

2. Schneidwerkzeugsystem nach Anspruch 1, wobei die Klemmvorrichtung ein Block (15) ist mit Mitteln (65) zur Veränderung der Breite der Öffnung (23), um den Werkzeugschaft in dieser einzuklemmen.

3. Schneidwerkzeugsystem nach Anspruch 1, wobei die Klemmvorrichtung eine Hülse (47) ist, die in einer Öffnung eines Adapters (49) angebracht ist mit Mitteln (65) zur Veränderung der Breite der Öffnung.

4. Schneidwerkzeugsystem nach einem der vorhergehenden Ansprüche, wobei der Schaft (3) des Schneidwerkzeuges (1) im wesentlichen zylindrisch ist und die Ausnehmung aus einer Nut (21) besteht, die sich längs der Länge der Hülloberfläche (10) des Schaftes (3) oder der inneren Oberfläche (12) der Öffnung (23) erstreckt, wobei die Nut zu der Mittelachse des Schaftes oder der Öffnung parallel verläuft.

5. Schneidwerkzeugsystem nach einem der Ansprüche 1 bis 4, wobei der Schaft (3) des Schneidwerkzeuges (1) und die Öffnung (23) der Klemmvorrichtung im wesentlichen zylindrisch sind, wobei eine Vielzahl von Ausnehmungen in der Form von Vertiefungen sich in einer Linie längs der Länge entweder der Hülloberfläche (10) des Schaftes oder der inneren Oberfläche (12) der Öffnung (23) erstreckt und die Linie der Vertiefungen parallel zu der Mittellinie des Schaftes oder Öffnung verläuft.

6. Schneidwerkzeugsystem nach einem der Ansprüche 1 bis 3, wobei eine der zusammenpassenden Oberflächen (10, 12) eine Federvorrichtung (30) und die andere eine Anzahl von Ausnehmungen in der Form von Nuten aufweist, die sich unter rechten Winkeln zu der Mittelachse der Werkzeugwelle oder der Öffnung erstrecken und in regelmäßigen Intervallen im Abstand angeordnet sind.

7. Schneidwerkzeugsystem nach einem der vorhergehenden Ansprüche, wobei die Federvorrichtung (30) an einem Ende eine Kugel oder einen Zylinder (33) aufweist, die bzw. der durch eine Feder (31, 51) in eine Ausnehmung (21) hinein belastet ist, wobei die Ausnehmung einen Querschnitt hat, der im wesentlichen U-förmig (21) ist.

**Revendications**

1. Système d'outil de coupe pour usinage par enlèvement de copeaux, constitué, d'une part, d'un dispositif de serrage (15, 47) comprenant une ouverture (23), qui est confinée par une surface intérieure (12), et une fente (19) permettant de faire varier la largeur de l'ouverture (23), et, d'autre part, d'un outil de coupe (1) comprenant une tige (3) et une arête de coupe (7), la tige ayant une surface enveloppante (10) coïncidant avec la surface intérieure (12) de l'ouverture, **caractérisé en ce qu'**un élément sollicité par ressort (33) d'un dispositif à ressort (30) fait saillie à partir d'une des dites surfaces (10, 12) et vient en prise avec une cavité (21) dans l'autre surface, de façon à indiquer la position de l'arête de coupe (7) par rapport au dispositif de serrage.

2. Système d'outil de coupe selon la revendication 1, dans lequel le dispositif de serrage est un bloc (15) comprenant des moyens (65) pour faire varier la largeur de l'ouverture (23) afin de serrer la tige de l'outil dans celle-ci.

3. Système d'outil de coupe selon la revendication 1, dans lequel le dispositif de serrage est un manchon (47) monté dans une, ouverture d'un adaptateur (49) comprenant des moyens (65) pour faire varier la largeur de l'ouverture.

4. Système d'outil de coupe selon l'une quelconque des revendications précédentes, dans lequel la tige (3) de l'outil de coupe (1) est sensiblement cylindrique et la cavité consiste en une rainure (21) s'étendant sur toute la longueur de la surface enveloppante (10) de la tige (3) ou de la surface intérieure (12) de l'ouverture (23), ladite rainure étant parallèle à l'axe central de la tige ou de l'ouverture.

**5.** Système d'outil de coupe selon l'une quelconque des revendications 1 à 4, dans lequel la tige (3) de l'outil de coupe (1) et l'ouverture (23) du dispositif de serrage sont sensiblement cylindriques, une pluralité de cavités sous la forme de fossettes s'étendant en ligne sur toute la longueur de la surface enveloppante (10) de la tige ou de la surface intérieure (12) de l'ouverture (23), ladite ligne de fossettes étant parallèle à l'axe central de la tige ou de l'ouverture.

**6.** Système d'outil de coupe selon l'une quelconque des revendications 1 à 3, dans lequel l'une des surfaces coïncidentes (10, 12) comprend un dispositif à ressort (30) et l'autre un certain nombre de cavités sous la forme de rainures qui s'étendent à angle droit par rapport à l'axe central de la tige d'outil ou de l'ouverture, et qui sont espacées à intervalles réguliers.

**7.** Système d'outil de coupe selon l'une quelconque des revendications précédentes, dans lequel le dispositif à ressort (30) comprend, à une extrémité, une bille ou un cylindre (33) qui est sollicité par un ressort (31, 51) dans une cavité (21) ayant sensiblement une forme de U (21) en section transversale.

**Fig. 1**
**(PRIOR ART)**

**Fig. 2**
**(PRIOR ART)**

**Fig. 3**
**(PRIOR ART)**

*Fig. 4*

*Fig. 4a*

*Fig. 4b*

*Fig. 4c*

*Fig. 5*

*Fig. 5a*

*Fig. 5b*

*Fig. 6*

*Fig. 7*

*Fig. 8*

*Fig. 9*

33

1

21

*Fig. 10*

67

30

15

α

7

5

1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 500836
- WO 9535179 A

- SE 509421